# EUROPÄISCHE PATENTSCHRIFT

(11) **EP 0 422 678 B1**
(45) Veröffentlichungstag und Bekanntmachung des Hinweises auf die Patenterteilung: **27.07.1994**
(21) Anmeldenummer: 90119619.6
(22) Anmeldetag: 12.10.1990
(51) Int. Cl.: B60R 9/055, E05C 9/02, E05C 9/18

(54) **Gepäckbox**
Luggage carrier
Coffre à bagages

(30) Priorität: 13.10.1989 DE 3934292
(43) Veröffentlichungstag der Anmeldung: 17.04.1991
(73) Patentinhaber: silvretta-sherpas Sportartikel GmbH, D-85757 Karlsfeld (DE)
(72) Erfinder: Eugler, Norbert, W-8060 Dachau (DE)
(74) Vertreter: Zmyj, Erwin, Dipl.-Ing., Dipl.-Wirtsch.-Ing.

(56) Entgegenhaltungen:
- DE-A- 3 637 244
- DK-A- 78 219
- FR-A- 853 371
- FR-A- 1 246 569
- US-A- 4 420 105

## Beschreibung

Die Erfindung bezieht sich auf eine auf dem Dach eines Kraftfahrzeuges anbringbare Gepäckbox mit Gepäckaufnahmeteil und Deckel, die durch mindestens eine an jeweils gegenüberliegenden Seiten der Gepäckbox angeordnete trennbare Scharniervorrichtungen miteinander verbindbar sind, welche jeweils aus zwei mit der Gepäckbox verbundenen Lagerteilen und einer mit dem Deckel verbundenen Scharnierachse bestehen, die im geschlossenen Zustand der Gepäckbox in beiden Lagerteilen eingeführt ist.

Bei einer bekannten, aus der FR-A-853 371 bekannten Gepäckbox dieser Art ist an zwei gegenüberliegenden Seiten des Deckels jeweils eine Schubstangenvorrichtung vorgesehen, bei der die Schubstangen an ihren gegeneinander liegenden Enden an einem mittels eines Handgriffes schwenkbaren doppelarmigen Hebel angelenkt sind, während die anderen voneinander entfernten Enden in Lagerbohrungen von Laschen aufgenommen sind, die mit dem Deckel der Gepäckbox verbunden sind. Weitere Laschen mit Lagerbohrungen, die im geschlossenen Zustand der Gepäckbox mit den Lagerbohrungen der mit dem Deckel verbundenen Laschen fluchten, sind mit dem Gepäckaufnahmeteil verbunden, wodurch im geschlossenen Zustand der Gepäckbox durch Verschwenken des doppelarmigen Hebels die Enden der Schubstangen in die Lagerbohrungen der mit dem Gepäckaufnahmeteil verbundenen Laschen eingreifen und somit die Gepäckbox verschließen. Durch Verdrehen des doppelarmigen Hebels in dem anderen Drehsinne werden die Schubstangen aus den Lagerbohrungen der mit dem Gepäckaufnahmeteil versehenen Laschen herausgezogen, so daß eine Trennung möglich ist. Wenn nur an einer Seite der Gepäckbox die Scharniervorrichtung geöffnet wird, so kann der Deckel um die als Scharnierachse dienenden Schubstangen verschwenkt werden, was wechselseitig möglich ist.

Bei dieser bekannten Gepäckbox muß der Deckel das Gepäckaufnahmeteil mit großem Abstand zur oberen Kante des Gepäckaufnahmeteils sowohl in Höhenrichtung als auch in seitlicher Richtung übergreifen, um an der Innenseite des Deckels in seinem Randbereich die Schubstangenvorrichtung und die Laschen zur Halterung der Schubstangen anbringen zu können. Dabei muß der seitliche Abstand so groß gewählt werden, daß die Schubstangenvorrichtung mit den Laschen über die Schließkante des Gepäckaufnahmeteiles von oben geschoben werden kann. Hierdurch ergibt sich der Nachteil eines begrenzten Schwenkwinkels, wenn darauf geachtet werden soll, daß der Deckel nicht allzusehr über das Gepäckaufnahmeteil in seitlicher Richtung übersteht. Ein weiterer Nachteil besteht darin, daß der Schubstangenmechanismus, der Gelenkverbindungen mit dem doppelarmigen Hebel aufweist, weitgehend gegen eindringenden Schmutz, der beim Fahren auf nassen verschmutzten Straßen aufgewirbelt wird, ungeschützt ist, so daß an den Gelenkverbindungen Störungen durch diesen eingedrungenen Schmutz einstellen können. Abgesehen davon, daß diese Scharnier- und Schließvorrichtung verhältnismäßig viele Einzelteile und insbesondere störanfällige Gelenkverbindungen aufweist, besteht noch ein entscheidender Nachteil darin, daß die einander zugeordneten Teile exakt gefertigt und vor allen Dingen exakt montiert werden müssen, wenn es möglich sein soll störungsfrei die Schubstangen in die Lagerbohrungen der am Gepäckteil angeordneten Laschen einschieben zu können. Da aber der Deckel das Gepäckaufnahmeteil mit großem Abstand weiträumig übergreift, so daß eine gegenseitige ausrichtende Abstützung zwischen Gepäckaufnahmeteil und Deckel nicht möglich ist, so muß der Deckel in sich sehr stabil ausgeführt sein, um ein Verziehen des Deckels zu vermeiden und ein Ineinandergreifen der Scharnierteile zu gewährleisten. Dies führt zu einer verhältnismäßig schweren Konstruktion.

Aufgabe der Erfindung ist es, eine wechselweise an jeder Seite zu öffnende Gepäckbox so auszugestalten, daß sie bei einfachem Aufbau ein wechselseitiges Öffnen und Schließen der Gepäckbox in sicherer Weise gestattet.

Diese Aufgabe wird ausgehend von einer Gepäckbox der eingangs erläuterten Art erfindungsgemäß dadurch gelöst, daß die beiden Lagerteile mit dem Gepäckaufnahmeteil verbunden und zum Lösen und Schließen der Scharniervorrichtung gegeneinander verschiebbar sind, und daß die beiden Lagerteile in der Schließstellung die Scharnierachse festlegen.

Hierdurch ist es möglich die beiden Lagerteile in unmittelbarer Nähe des Randbereiches des Gepäckaufnahmeteiles unterzubringen, wodurch ineinander greifende Schließränder von Gepäckaufnahmeteil und Deckel verwirklicht werden können, so daß sich die beiden Teile, nämlich Deckel und Gepäckaufnahmeteil gegenseitig stabilisieren. Da die beiden Lagerteile an dem Gepäckaufnahmeteil angeordnet sind, wobei das eine Lagerteil gegenüber dem anderen Lagerteil verschiebbar ist, können sich Herstellungs- und Montagetoleranzen nicht so stark auswirken, daß hierdurch eine Beeinträchtigung beim Schließvorgang zu erwarten wäre, da die Scharnierachse beim Schließen des Deckels mit dem feststehenden Lagerteil zusammenwirkt, bevor sie durch das verschiebbare Lagerteil festgelegt wird, so daß hierdurch das fluchtende Zusammentreffen sämtlicher Teile der Scharniervorrichtung besser gewährleistet ist, als wenn man eine Schubstange durch eine fluchtend zu haltende Bohrung einfädeln muß. Da bei der erfindungsgemäßen Ausgestaltung das Gepäckaufnahmeteil und der Deckel ineinanderpassend gefertigt werden können und sich somit in der geschlossenen Lage gegenseitig stabilisieren, kommt man an jeder Seite der Gepäckbox mit nur einer Scharniervorrichtung aus, während bei der eingangs erläuterten bekannten Gepäckbox wegen des weit über das Gepäckaufnahmeteil überstehenden Deckels zwei Scharniervorrichtungen notwendig sind, um die gewünschte Stabilität und sichere Halterung des Deckels auf dem Gepäckaufnahmeteil zu gewährleisten, was den konstruktiven Aufwand erhöht.

Es ist dabei vorteilhaft, wenn der eine Lagerteil feststeht und der andere Lagerteil verschiebbar am Gepäckaufnahmeteil vorgesehen ist.

Eine vorteilhafte Weiterbildung der Erfindung besteht darin, daß am Deckel ein Steuerteil vorgesehen ist, das beim Schließen des Deckels dem verschiebbaren Lagerteil mittels einer Schrägfläche gegen die Wirkung einer den verschiebbaren Lagerteil belastenden Feder in die Offenstellung drückt und ihn bei Erreichen der fluchtenden Stellung der Scharnierachse mit den Lagerteilen wieder in seine Schließstellung freigibt. Hierdurch werden beim Schließen des Deckels die Scharnierteile automatisch in ihre Lage gebracht, in der sie miteinander verbunden sind und ein Scharnier bilden, so daß der Deckel nun um dieses Scharnier geschwenkt werden kann, ohne daß besondere Umstellungsarbeiten notwendig wären.

Um sowohl die Scharnierachse als auch das Steuerteil am Deckel festlegen zu können, ist in weiterer Ausgestaltung der Erfindung am Deckel ein Halter vorgesehen, der an seinem freien Ende sowohl die Scharnierachse als auch den Steuerteil aufweist.

Damit die Scharnierachse vom verschiebbaren Lagerteil gut erfaßt werden kann, um es in der Schließstellung zu halten, steht in weiterer Ausgestaltung der Erfindung die Scharnierachse in Richtung ihrer Längsachse seitlich über den Rand des Halters hervor und der verschiebbare Lagerteil wirkt mit diesem vorstehenden Teil der Scharnierachse in der Schließstellung zusammen.

Eine besonders einfache Ausgestaltung, die eine sichere Funktionsweise gewährleistet, ist gemäß der Erfindung dadurch gekennzeichnet, daß das Steuerteil unmittelbar an der Unterseite der Scharnierachse befestigt ist und mit seiner Schrägfläche mit dem überstehenden Ende der Scharnierachse fluchtet. Somit ist gewährleistet, daß nach der Verschiebung des verschiebbaren Lagerteils durch das Steuerteil , das verschiebbare Lagerteil durch die Wirkung der Feder über die Scharnierachse geschoben wird, wodurch die Scharniervorrichtung geschlossen ist.

Gemäß einer anderen Ausgestaltung der Erfindung kann das Steuerteil eine Schräge und eine in Richtung auf seinen Halter anschließende Ausnehmung aufweisen, in die das verschiebbare Lagerteil in der Schließstellung eingreift. Bei dieser Ausgestaltung sind das Steuerteil und die Scharnierachse getrennt voneinander am Halter angeordnet.

Eine bevorzugte Ausgestaltung der Erfindung ergibt sich dadurch, daß das feststehende Lagerteil als eine nach oben offene Halbschale und das verschiebbare Lagerteil als eine nach unten offene Halbschale ausgeführt sind, wobei das verschiebbare Lagerteil das feststehende Lagerteil zu einem Lager für die Scharnierachse ergänzt und in einer parallel zur Längsachse des feststehenden Lagerteils verlaufenden Führung geführt ist. Diese Ausgestaltung ermöglicht eine exakte Scharnierfunktion, wobei gleichzeitig eine äußerst stabile Scharniervorrichtung geschaffen ist, die gleichzeitig als Schließvorrichtung dient.

Es empfiehlt sich, daß bei Ausbildung des feststehenden Lagerteils als durchlaufendes Halbschalenprofil, dieses eine Öffnung für das Steuerteil aufweist, die quer zur Längserstreckung des Lagerteils eine Schwenkbewegung des Steuerteiles zuläßt, wenn die Scharnierachse von dem verschiebbaren Lagerteil übergriffen ist und somit als Scharnier für den Deckel dient.

Bei der Ausgestaltung, bei der das Steuerteil unmittelbar an der Unterseite der Scharnierachse befestigt ist, empfiehlt es sich, daß das verschiebbare Lagerteil als durchlaufendes Halbschalenprofil ausgeführt ist und eine Öffnung für den Steuerteil und die Scharnierachse aufweist.

Bei der Ausgestaltung, bei der Steuerteil und Scharnierachse getrennt ausgeführt sind, ist das verschiebbare Lagerteil ebenfalls als durchlaufendes Halbschalenprofil ausgeführt und weist eine Öffnung für den Steuerteil sowie eine Öffnung für die Scharnierachse auf.

Durch die Ausbildung des feststehenden Lagerteils und des verschiebbaren Lagerteils als durchlaufendes Halbschalenprofil wird die Fertigung der Scharniervorrichtung erheblich vereinfacht.

Das Öffnen und Schließen der Scharniervorrichtung wird erheblich vereinfacht, wenn in weiterer Ausgestaltung der Erfindung am Gepäckaufnahmeteil eine von Hand betätigbare Vorrichtung zur Verschiebung des verschiebbaren Lagerteiles vorgesehen ist. Dabei kann die von Hand betätigbare Vorrichtung ein in der Wand des Gepäckaufnahmeteiles drehbar gelagertes, mit dem verschiebbaren Lagerteil zusammenwirkendes, Betätigungsglied aufweisen, das mittels eines Schlosses blockierbar ist. Hierdurch ist die Gepäckbox absperrbar.

Die Erfindung wird nachstehend anhand zweier Ausführungsbeispiele, die in den Zeichnungen dargestellt sind, näher erläutert.

In den Zeichnungen zeigen:
- Figuren 1 und 2 :: Stirnansichten einer Gepäckbox in jeweils entgegengesetzter Offenstellung;
- Figur 3 :: einen Ausschnitt einer teilweise geschnittenen Innenansicht der Gepäckbox im Bereich einer ersten Ausführungsform der Scharniervorrichtung;
- Figur 4 :: eine der Figur 3 entsprechende Darstellung einer zweiten Ausführungsform der Scharniervorrichtung;
- Figur 5 :: eine schaubildliche Darstellung der Scharniervorrichtung gemäß Figur 4;
- Figur 6 :: einen Schnitt nach der Linie VI - VI in Figur 5; und
- Figur 7 :: die Anordnung nach Figur 6 im verschwenkten Zustand des Deckels der Gepäckbox.

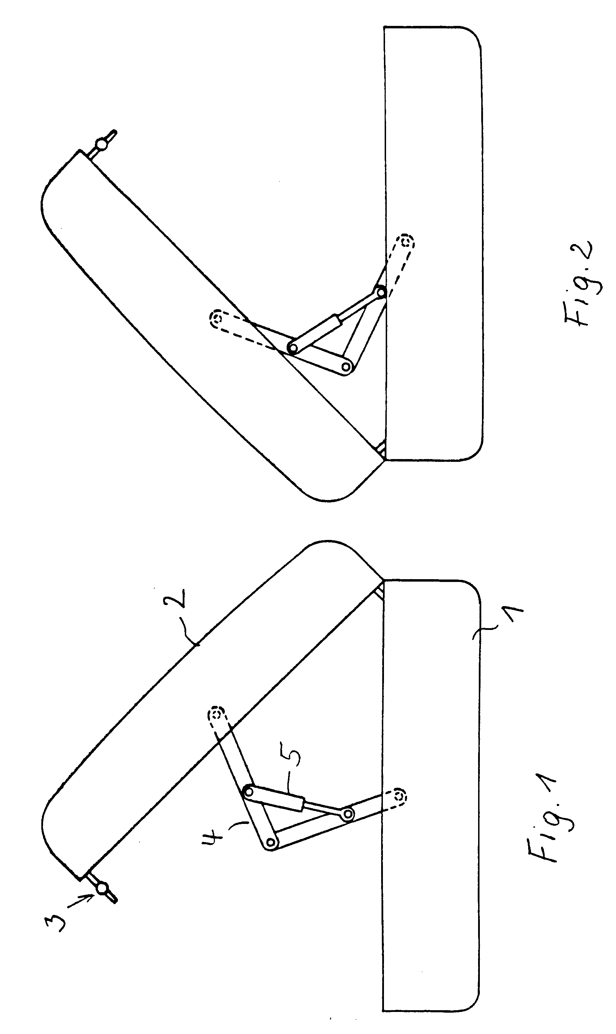

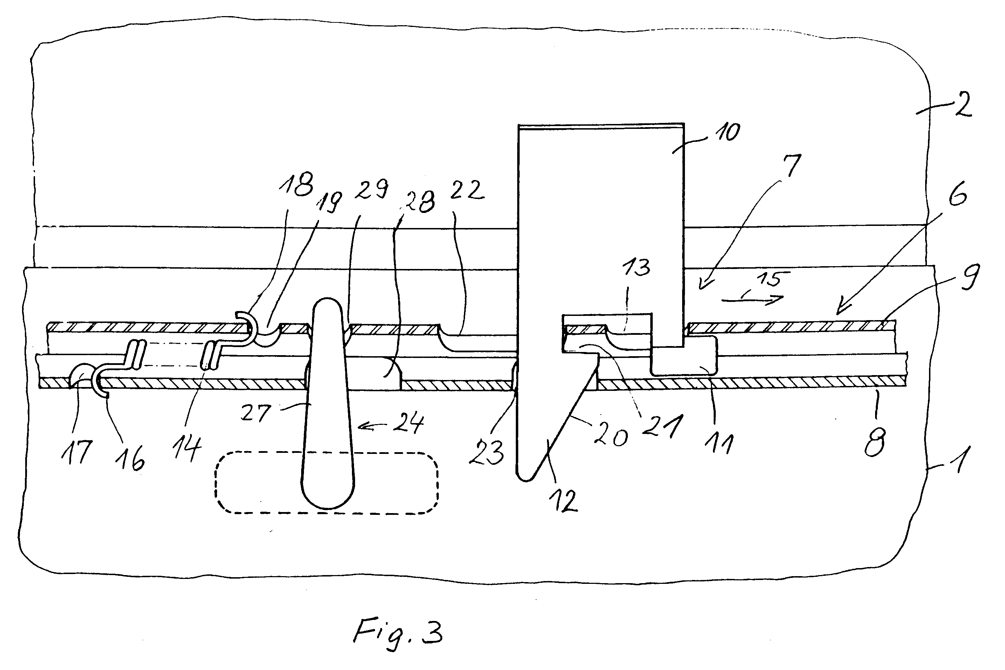

Entsprechend den Figuren 1 und 2, die eine Gepäckbox in zwei verschiedenen Offenstellungen zeigen, ist ersichtlich, daß die Gepäckbox einen Gepäckaufnahmeteil 1 und einen Deckel 2 aufweist, der über trennbare Scharniervorrichtungen , die an der Längsseite angeordnet sind und gleichzeitig als Schließvorrichtung dienen, am Gepäckaufnahmeteil 1 festlegbar ist. Diese Scharniervorrichtung, von der ein insgesamt mit 7 bezeichneter Teil in den Figuren 1 und 2 gezeigt ist, wird anhand der nachfolgenden Figuren näher erläutert. Der Deckel 2 ist in seinem mittleren Bereich der Stirnseite mittels einer Kniehebelanordnung 4 und einer Gasfeder 5 in der Offenstellung gehalten, wobei diese Anordnung so getroffen ist, daß sie den Deckel, unabhängig davon, ob er an der linken Seite oder an der rechten Seite geöffnet wird, in der Offenstellung halten kann.

Wie aus Figur 3 ersichtlich, die eine erste Ausführungsform einer Scharniervorrichtung zeigt, umfaßt diese Scharniervorrichtung einen insgesamt mit 6 bezeichneten unteren Scharnierteil, der dem Gepäckaufnahmeteil 1 zugeordnet ist und einen dem Deckel 2 zugeordneten, insgesamt mit 7 bezeichneten kombinierten Teil, der einen Halter 10, eine Scharnierachse 11 und einen Steuerteil 12 umfaßt.

Der untere Scharnierteil 6 weist ein nach oben offenes, feststehendes Lagerteil 8 auf, das als Halbschale ausgebildet und zur Ergänzung des Lagers für das noch zu beschreibende obere Scharnierteil von einem gegenüber dem Lagerteil 8 verschiebbaren Lagerteil 9 überdeckt ist, welches ebenfalls als offene Halbschale ausgeführt ist, die mit der offenen Seite nach unten angeordnet ist.

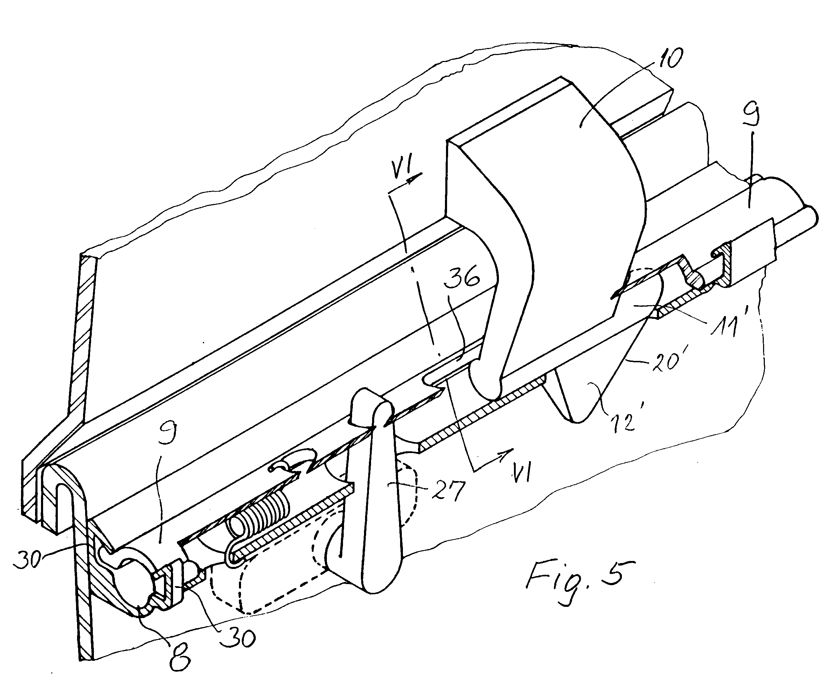

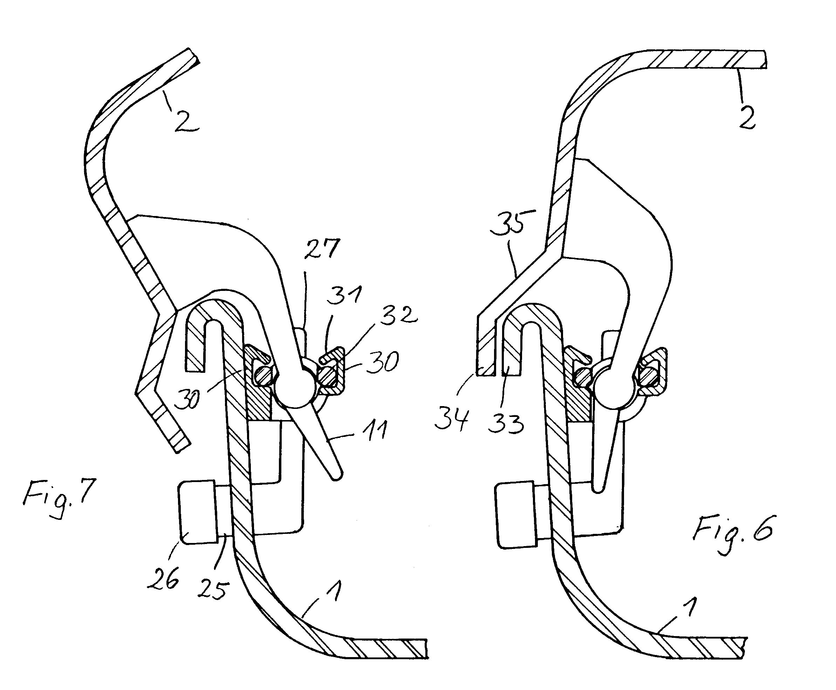

Das Teil 7 am Deckel 2 umfaßt einen am Deckel befestigten Halter 10, der an seinem freien Ende eine Scharnierachse 11 und ein Steuerteil 12 aufweist. Die Scharnierachse 11 ist zylinderförmig ausgebildet und ist im geschlossenen Zustand der Gepäckbox im feststehenden Lagerteil 8 abgestützt und vom verschiebbaren Lagerteil 9 überdeckt, wofür die Scharnierachse 11 über den Rand des Halters 10 hervorsteht. Damit die Scharnierachse 11 in die in Figur 3 gezeichnete Lage gelangen kann ist das verschiebbare Lagerteil 9 mit einer Öffnung 13 versehen und gegen die Wirkung einer Feder 14 in Richtung des Pfeiles 15 verschiebbar. Die Feder 14 greift mit ihrem einen Ende 16 in eine Bohrung 17 des feststehenden Lagerteils 8 und mit ihrem anderen Ende 18 in eine Bohrung 19 des verschiebbaren Lagerteiles 9 ein, wodurch das Lagerteil 9 in die in Figur 3 gezeigte Endlage gezogen wird, in der das Lagerteil 9 die Scharnierachse 11 übergreift, nachdem es vorher durch die Öffnung 13 im Lagerteil 9 in das Lagerteil 8 eingeführt wurde. Das Verschieben des Lagerteiles 9 in Richtung des Pfeiles 15, um ein Einführen der Scharnierachse in das aus den Lagerteilen 8 und 9 gebildete Lager zu ermöglichen, erfolgt durch das Steuerteil 12, welches eine Schräge 20 aufweist, die mit dem einen Rand einer Öffnung 22 im Lagerteil 9 zusammenwirkt, wodurch das Lagerteil 9 entgegen der Wirkung der Feder 14 aufgrund der Schräge 20 des Steuerteil es 12 in Richtung des Pfeiles 15 verschoben wird, wenn das Steuerteil 12 in die Öffnung 22 des Schließteiles eingeführt wird. Am Ende der Schräge 20 ist eine Ausnehmung 21 ausgebildet, in die das verschiebbare Lagerteil 9 unter der Wirkung der Feder 14 gezogen wird. Da für diesen Verschiebeweg in Richtung des Pfeiles 15 eine verhältnismäßige lange Schräge 20 notwendig ist, ist das Steuerteil 12 so lang ausgeführt, daß es auch noch durch eine Öffnung 23 am Grund des feststehenden Lagerteiles 8 hindurchfaßt, wenn die Scharnierachse 11 im Lagerteil 8 aufgenommen ist. Die Öffnung 23 ermöglicht eine Verschwenkung des Steuerteiles 12 quer zur Zeichenebene, wenn der Deckel 2 geöffnet wird, wobei eine Verschwenkung des Deckels um die zentrale Achse der zylindrischen Scharnierachse 11 erfolgt, die im Lagerteil 8 abgestützt und vom Lagerteil 9 abgedeckt ist, die zusammen mit der Scharnierachse 11 die Scharniervorrichtung für die Gepäckbox bilden. Die Lagerung der Scharnierachse 11 in ihrem aus Lagerteil 8 und Lagerteil 9 gebildeten Lager und die beiden Schwenkstelungen im geschlossenen und geöffneten Zustand des Deckels ergeben sich aus den Figuren 6 und 7. Diese zeigen zwar Schnitte durch die Ausführungsform nach Figur 5, doch besteht hinsichtlich der Lagerung kein prinzipieller Unterschied zur Ausführungsform nach Figur 3.

Soll der Deckel geöffnet werden, dann muß das verschiebbare Lagerteil 9 soweit in Richtung des Pfeiles 15 verschoben werden, bis die Scharnierachse 11 von dem Lagerteil 9 freikommen und durch die Öffnung 13 nach oben herausgeführt werden kann. Hierfür ist am Gepäckaufnahmeteil 1 ein Betätigungsglied 24 gelagert, welches, wie aus den Figuren 6 und 7 ersichtlich L-förmig ausgeführt ist. Dabei ist der kurze Schenkel 25 in der Wand des Gepäckaufnahmeteils 1 drehbar gelagert. Das durch die Wand des Gepäckaufnahmeteils 1 nach außen vorstehende freie Ende des kurzen Schenkels 25 ist mit einem Drehknopf 26 versehen, um den mit 27 bezeichneten längeren Schenkel des Betätigungsgliedes 24 verschwenken zu können, der durch ein Langloch 28 des Aufnahmelagers hindurchfaßt und in eine Öffnung 29 des Lagerteiles 9 eingreift. Bei einem Verdrehen des Drehknopfes 26 wird der Hebel 27 verschwenkt und nimmt dabei das Lagerteil 9 in Richtung des Pfeiles 15 mit, wodurch die Öffnung 13 über der Scharnierachse 11 zu liegen kommt, so daß die Scharnierachse aus dem feststehenden Lagerteil 8 herausgeholt werden kann. Gleichzeitig kommt auch bei der Verschiebung des Lagerteiles 9 die Öffnung 22 über dem Steuerteil 12 zu liegen, so daß eine Sperrung beim Anheben des Halters 10 zum Zwecke des Öffnen des Deckels nicht mehr besteht.

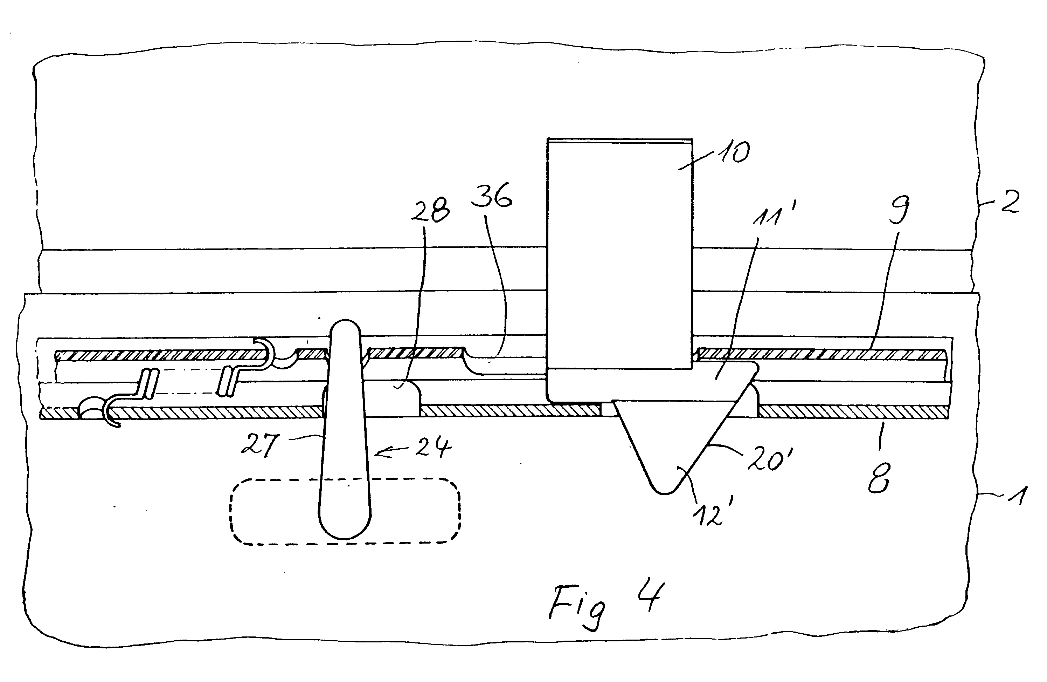

Die in den Figuren 4 bis 7 dargestellte Ausführungsform unterscheidet sich von derjenigen nach Figur 3 nur dadurch, daß sich die Scharnierachse 11' über die gesamte Breite des Halters 10 erstreckt und daß das Steuerteil 12' an der Unterseite der Scharnierachse 11 angeordnet ist, so daß sich eine Einheit aus Scharnierachse 11' und Steuerteil 12' ergibt, während nach der Ausführungsform nach Figur 3 diese beiden Teile getrennt voneinander ausgebildet sind. Das Steuerteil 12' ist dabei im wesentlichen im Bereich des in der Zeichnung rechten Randes des Halters 10 angeordnet, während das Steuerteil 12 bei der Ausführungsform nach Figur 3 im wesentlichen im Bereich des in der Zeichnung linken Randes des Halters 10 vorgesehen ist. Wegen der einstückigen Ausführung von Scharnierachse 11' und des Steuerteiles 12' ist im Lagerteil 9 an Stelle der Öffnungen 13 und 22 eine gemeinsame Öffnung 36 vorgesehen. Aus dieser unterschiedlichen Ausgestaltung ergibt sich eine andere Kraftverteilung in bezug auf die Scharnierachse 11' im Vergleich zur Scharnierachse 11. Während sich bei der Scharnierachse 11 der Ausführungsform nach Figur 3 die auf das Lagerteil 8 wirkende Stützkraft und die auf das Lagerteil 9 wirkende Rückhaltekraft im wesentlichen einander gegenüberliegen, sind diese Kräfte bei der Ausführungsform nach den Figuren 4 bis 7 gegeneinander versetzt. Die Abstützkraft wirkt im wesentlichen im Bereich des in der Zeichnung linken Randes des Halters 10, während die Rückhaltekraft ebenso wie bei der Ausführungsform nach Figur 3 an dem über den rechten Rand des Halters herausragenden Teil der Scharnierachse 11 bzw. 11' angreift. Hinsichtlich der Funktion der miteinander zusammenwirkenden Teile beim Öffnen und Schließen sowie Verschwenken des Deckels bestehen keine Unterschiede. Da auch die anderen Teile identisch ausgeführt sind, sind sie auch mit den gleichen Bezugszeichen versehen, so daß hinsichtlich der gleichen Teile auf die Beschreibung der Ausführungsform gemäß Figur 3 zurückgegriffen werden kann.

Die Führung des verschiebbaren Lagerteiles 9 gegenüber dem feststehenden Lagerteil 8 ist aus den Figuren 5 bis 7 ersichtlich und bei beiden Ausführungsformen identisch. Zur Führung des Lagerteiles 9 sind an dem halbschalenförmigen Lagerteil 8 zu beiden Seiten desselben im wesentlichen U-förmige Profilschienen 30 einstückig angeformt, die mit ihren offenen Seiten einander gegenüberstehen. Dabei ist der obere Schenkel 31 etwas nach unten geneigt ausgeführt, um eine sichere Halterung und Führung für die im Querschnitt zylindrische Führungsleisten 32 bilden zu können, die an beiden seitlichen Rändern des Lagerteiles 9 einstückig mit diesem angeformt sind.

Aus den Figuren 5 bis 7 ist auch noch ersichtlich, daß sowohl das Gepäckaufnahmeteil 1 als auch der Deckel 2 schalenförmig ausgebildet sind, wobei der obere Rand des Gepäckaufnahmeteils nach außen und unten umgebördelt ist, während der äußere Rand des Deckels 1 im geschlossenen Zustand der Gepäckbox diesen umgebördelten Rand 33 übergreift. Dieser mit 34 bezeichnete Rand des Deckels ist an einem schräg nach außen verlaufenden Wandteil 35 angeformt, um so bei übereinstimmenden Abmessungen hinsichtlich der Länge und Breite beim Gepäckaufnahmeteil 1 und Deckel 2 ein Übergreifen des Randes 33 des Gepäckaufnahmeteils 1 zu ermöglichen.

## Patentansprüche

1. Auf dem Dach eines Kraftfahrzeuges anbringbare Gepäckbox mit Gepäckaufnahmeteil (1) und Deckel (2), die durch mindestens eine jeweils an gegenüberliegenden Seiten der Gepäckbox angeordnete trennbare Scharniervorrichtungen (8, 9, 11; 8, 9, 11') miteinander verbindbar sind, welche jeweils aus zwei mit der Gepäckbox verbundenen Lagerteilen (8, 9) und einer mit dem Deckel (2) verbundenen Scharnierachse (11, 11') bestehen, die im geschlossenen Zustand der Gepäckbox in beiden Lagerteilen eingeführt ist, **dadurch gekennzeichnet,** daß die beiden Lagerteile (8, 9) mit dem Gepäckaufnahmeteil (1) verbunden und zum Lösen und Schließen der Scharniervorrichtung gegeneinander verschiebbar sind und daß die beiden Lagerteile (8, 9) in der Schließstellung die Scharnierachse (11, 11') festlegen.

2. Gepäckbox nach Anspruch 1, **dadurch gekennzeichnet,** daß der eine Lagerteil (8) feststehend und der andere Lagerteil (9) verschiebbar am Gepäckaufnahmeteil (1) vorgesehen ist.

3. Gepäckbox nach Anspruch 1 oder 2, **dadurch gekennzeichnet,** daß am Deckel (2) ein Steuerteil (12, 12') vorgesehen ist, das beim Schließen des Deckels (2) den verschiebbaren Lagerteil (9) mittels einer Schrägfläche (20, 20') gegen die Wirkung einer den verschiebbaren Lagerteil (9) belastenden Feder (14) in die Offenstellung drückt und ihn bei Erreichen der fluchtenden Stellung der Scharnierachse (11, 11') mit den Lagerteilen (8, 9) wieder in seine Schließstellung freigibt.

4. Gepäckbox nach einem der Ansprüche 1 bis 3, **dadurch gekennzeichnet,** daß am Deckel (2) ein Halter (10) vorgesehen ist, der an seinem freien Ende sowohl die Scharnierachse (11, 11') als auch den Steuerteil (12, 12') aufweist.

5. Gepäckbox nach Anspruch 4, **dadurch gekennzeichnet,** daß die Scharnierachse (11, 11') in Richtung ihrer Längsachse seitlich über den Rand des Halters (10) hervorsteht und daß der verschiebbare Lagerteil (9) mit diesem vorstehenden Teil der Scharnierachse (11, 11') in der Schließstellung zusammenwirkt.

6. Gepäckbox nach Anspruch 5, **dadurch gekennzeichnet,** daß das Steuerteil (12') unmittelbar an der Unterseite der Scharnierachse (11') befestigt ist und mit seiner Schrägfläche (20') mit dem überstehenden Ende der Scharnierachse (11') fluchtet.

7. Gepäckbox nach Anspruch 4 oder 5, **dadurch gekennzeichnet,** daß das Steuerteil (12) eine Schräge (20) und eine in Richtung auf seinen Halter (10) anschließende Ausnehmung (21) aufweist, in die das verschiebbare Lagerteil (9) in der Schließstellung eingreift.

8. Gepäckbox nach einem der Ansprüche 1 bis 7, **dadurch gekennzeichnet,** daß das feststehende Lagerteil (8) als eine nach oben offene Halbschale und das verschiebbare Lagerteil (9) als eine nach unten offene Halbschale ausgeführt sind, wobei das verschiebbare Lagerteil (9) das feststehende Lagerteil (8) zu einem Lager für die Scharnierachse (11, 11') ergänzt und in einer parallel zur Längsachse des feststehenden Lagerteils verlaufenden Führung (30) geführt ist.

9. Gepäckbox nach einem der Ansprüche 1 bis 8, **dadurch gekennzeichnet,** daß bei Ausbildung des feststehenden Lagerteils (8) als durchlaufendes Halbschalenprofil , dieses eine Öffnung (23) für das Steuerteil (12, 12') aufweist, die quer zur Längserstreckung des Lagerteiles (8) eine Schwenkbewegung des Steuerteiles (12, 12') zuläßt, wenn die Scharnierachse (11, 11') von dem verschiebbaren Lagerteil (9) übergriffen ist.

10. Gepäckbox nach Anspruch 6 und 8, **dadurch gekennzeichnet,** daß das verschiebbare Lagerteil (9) als durchlaufendes Halbschalenprofil ausgeführt ist und eine Öffnung (36) für den Steuerteil (12') und die Scharnierachse (11') aufweist.

11. Gepäckbox nach Anspruch 7 und 8, **dadurch gekennzeichnet,** daß das verschiebbare Lagerteil (9) als durchlaufendes Halbschalenprofil ausgeführt ist und eine Öffnung (22) für den Steuerteil (12) sowie eine Öffnung (13) für die Scharnierachse (11) aufweist.

12. Gepäckbox nach einem der Ansprüche 1 bis 11, **dadurch gekennzeichnet,** daß am Gepäckaufnahmeteil (1) eine von Hand betätigbare Vorrichtung (24) zur Verschiebung des verschiebbaren Lagerteiles (9) vorgesehen ist.

13. Gepäckbox nach Anspruch 12, **dadurch gekennzeichnet,** daß die von Hand betätigbare Vorrichtung (24) ein in der Wand des Gepäckaufnahmeteiles (1) drehbar gelagertes, mit dem verschiebbaren Lagerteil (9) zusammenwirkendes Betätigungsglied (27) aufweist, das mittels eines Schlosses blockierbar ist.

## Claims

1. Luggage carrier which can be mounted on the roof of a motor vehicle, comprising a luggage receptacle (1) and a lid (2) which can be connected to one another by means of at least one separable hinge (8, 9, 11; 8, 9, 11') arranged on opposing sides of the luggage carrier, said hinge consisting of two bearing parts (8, 9) connected to the luggage carrier and a hinge axis (11, 11') which is connected to the lid (2) and is introduced into the two bearing parts in the closed state of the luggage carrier, characterised in that the two bearing parts (8, 9) are connected to the luggage receptacle (1) and can be displaced relative to one another for releasing and closing the hinge and that the two bearing parts (8, 9) fix the hinge axis (11, 11') in the closed position.

2. Luggage carrier according to claim 1, characterised in that one bearing part (8) is fixedly provided and the other bearing part (9) is displaceably provided on the luggage receptacle (1).

3. Luggage carrier according to claim 1 or claim 2, characterised in that a control part (12, 12') is provided on the lid (2) and presses the displaceable bearing part (9) into the open position by means of an inclined surface (20, 20') against the action of a spring (14) loading the displaceable bearing part (9) when the lid (2) is closed and returns it to its closed position when the hinge axis (11, 11') is aligned with the bearing parts (8, 9).

4. Luggage carrier according to one of claims 1 to 3, characterised in that a holder (10) which has both the hinge axis (11, 11') and the control part (12, 12') at its free end is provided on the lid (2).

5. Luggage carrier according to claim 4, characterised in that the hinge axis (11, 11') projects laterally beyond the edge of the holder (10) in the direction of its longitudinal axis and that the displaceable bearing part (9) cooperates with this projecting part of the hinge axis (11, 11') in the closed position.

6. Luggage carrier according to claim 5, characterised in that the control part (12') is secured directly to the underside of the hinge axis (11') and is aligned with the projecting end of the hinge axis (11') via its inclined surface (20').

7. Luggage carrier according to claim 4 or claim 5, characterised in that the control part (12) has an incline (20) and an adjacent recess (21) in the direction of its holder (10), the displaceable bearing part (9) engaging said recess in the closed position.

8. Luggage carrier according to one of claims 1 to 7, characterised in that the fixed bearing part (8) is designed as a half shell open towards the top and the displaceable bearing part (9) is designed as a half shell open towards the bottom, the displaceable bearing part (9) complementing the fixed bearing part (8) to form a bearing for the hinge axis (11, 11') and being guided in a guide (30) extending parallel to the longitudinal axis of the fixed bearing part.

9. Luggage carrier according to one of claims 1 to 8, characterised in that, when the fixed bearing part (8) is designed as a continuous half shell profile section, it has an opening (23) for the control part (12, 12') which allows for a swivel movement of the control part (12, 12') transversely to the longitudinal extent of the bearing part (8) when the hinge axis (11, 11') is overlapped by the displaceable bearing part (9).

10. Luggage carrier according to claims 6 and 8, characterised in that the displaceable bearing part (9) is designed as a continuous half shell profile section and has an opening (36) for the control part (12') and the hinge axis (11').

11. Luggage carrier according to claims 7 and 8, characterised in that the displaceable bearing part (9) is designed as a continuous half shell profile section and has an opening (22) for the control part (12) and an opening (13) for the hinge axis (11).

12. Luggage carrier according to one of claims 1 to 11, characterised in that a manually operated device (24) for displacing the displaceable bearing part (9) is provided on the luggage receptacle (1).

13. Luggage carrier according to claim 12, characterised in that the manually operated device (24) has an actuating member (27) which is rotatably mounted in the wall of the luggage receptacle (1), cooperates with the displaceable bearing part (9) and can be locked by means of a lock.

## Revendications

1. Coffre à bagages qui peut être fixé sur le toit d'une voiture automobile et qui comporte un compartiment de logement des bagages (1) ainsi qu'un couvercle (2), ces parties pouvant être reliées l'une à l'autre à l'aide d'au moins un dispositif à charnière séparable (8, 9, 11; 8, 9, 11') qui est disposé sur les côtés opposés respectifs du coffre à bagages et qui se compose respectivement de deux éléments de joint (8, 9) solidaires du coffre à bagages ainsi que d'un axe de charnière (11, 11') relié au couvercle (2) et engagé dans les deux éléments de joint à l'état fermé du coffre à bagages, caractérisé en ce que les deux éléments de joint (8, 9) sont fixés au compartiment de logement des bagages (1) et sont déplaçables l'un par rapport à l'autre en vue du déserrage et de la fermeture du dispositif à charnière et en ce que les deux éléments de joint (8, 9) immobilisent l'axe de charnière (11, 11') dans la position de fermeture.

2. Coffre à bagages suivant la revendication 1, caractérisé en ce que l'un des éléments de joint (8) est prévu immobile et que l'autre élément de joint (9) est prévu déplaçable sur le compartiment de logement des bagages (1).

3. Coffre à bagages suivant la revendication 1 ou 2, caractérisé en ce que sur le couvercle (2) il est prévu un organe de manoeuvre (12, 12'), qui, au cours de la fermeture du couvercle (2), pousse l'élément de joint déplaçable (9) par l'intermédiaire d'une surface oblique (20, 20') et contre l'action d'un ressort (14) mettant sous charge l'élément de joint déplaçable (9), en direction de la position d'ouverture et qui, lorsque la position alignée de l'axe de charnière (11, 11') avec les éléments de joint (8, 9) est atteinte, libère de nouveau ledit élément (9) dans sa position de fermeture.

4. Coffre à bagages suivant une des revendications 1 à 3, caractérisé en ce que sur le couvercle (2) il est prévu une poignée (10) qui, à son extrémité libre, est pourvue tout aussi bien de l'axe de charnière (11, 11') que de l'organe de manoeuvre (12, 12').

5. Coffre à bagages suivant la revendication 4, caractérisé en ce que dans la direction de son axe longitudinal l'axe de charnière (11, 11') dépasse latéralement le bord de la poignée (10) et en ce que l'élément de joint déplaçable (9) collabore avec cette partie en saillie de l'axe de charnière (11, 11') dans la position de fermeture.

6. Coffre à bagages suivant la revendication 5, caractérisé en ce que l'organe de manoeuvre (12') est fixé directement à la face inférieure de l'axe de charnière (11') et que par sa surface oblique (20') il se trouve en alignement avec la partie en saillie de l'axe de charnière (11').

7. Coffre à bagages suivant la revendication 4 ou 5, caractérisé en ce que l'organe de manoeuvre (12) est garni d'une surface oblique (20) ainsi que d'une échancrure (21) qui lui fait suite dans la direction de sa poignée (10) et dans laquelle s'engage l'élément de joint déplaçable (9) dans la position de fermeture.

8. Coffre à bagages suivant une des revendications 1 à 7, caractérisé en ce que l'élément de joint immobile (8) est exécuté en demi-coque ouverte vers le haut et l'élément de joint déplaçable (9) en demi-coque ouverte vers le bas, et que l'élément de joint déplaçable (9) complète l'élément de joint immobile (8) pour former un support pour l'axe de charnière (11, 11') et est guidé dans une glissière (30) parallèle à l'axe longitudinal de l'élément de joint immobile.

9. Coffre à bagages suivant une des revendications 1 à 8, caractérisé en ce que lors de la formation de l'élément de joint immobile (8) comme profil continu en demi-coque, cet élément est pourvu d'une ouverture (23) pour l'organe de manoeuvre (12, 12') qui permet un mouvement de pivotement de l'organe de manoeuvre perpendiculairement à l'étendue longitudinale de l'élément de joint (8) lorsque l'axe de charnière (11, 11') se trouve chevauché par l'élément de joint (9).

10. Coffre à bagages suivant la revendication 6 et 8, caractérisé en ce que l'élément de joint déplaçable (9) est exécuté comme profil continu en demi-coque et est pourvu d'une ouverture (36) pour l'organe de manoeuvre (12') et pour l' axe de charnière (11').

11. Coffre à bagages suivant la revendication 7 et 8, caractérisé en ce que l'élément de joint déplaçable (9) est exécuté comme profil continu en demi-coque et est pourvu d'une ouverture (22) pour l'organe de manoeuvre (12) ainsi que d'une ouverture (13) pour l'axe de charnière (11).

12. Coffre à bagages suivant une des revendications 1 à 11, caractérisé en ce que sur le compartiment de logement des bagages (1) il est prévu un dispositif (24) à actionnement manuel pour déplacer l'élément de joint déplaçable (9).

13. Coffre à bagages suivant la revendication 12, caractérisé en ce que le dispositif à actionnement manuel (24) comporte une manette de commande (27) qui est reçue de manière rotative dans la paroi du compartiment de logement des bagages (1) et qui collabore avec l'élément de joint déplaçable (9), ladite manette pouvant être bloquée au moyen d'une serrure.
